# EUROPEAN PATENT SPECIFICATION

(11) **EP 3 910 979 B1**
(45) Date of publication and mention of the grant of the patent: **31.12.2025**
(21) Application number: 19909015.0
(22) Date of filing: 20.11.2019
(51) Int. Cl.: H04W 72/0446, H04L 5/00, H04W 88/08

(54) **COMMUNICATION CONTROL DEVICE, COMMUNICATION CONTROL METHOD, AND COMPUTER PROGRAM**
KOMMUNIKATIONSSTEUERUNGSVORRICHTUNG, KOMMUNIKATIONSSTEUERUNGSVERFAHREN UND COMPUTERPROGRAMM
DISPOSITIF DE CONTRÔLE DE COMMUNICATION, PROCÉDÉ DE CONTRÔLE DE COMMUNICATION, ET PROGRAMME INFORMATIQUE

(30) Priority: 10.01.2019 JP 2019002418
(43) Date of publication of application: 17.11.2021
(73) Proprietor: Sony Group Corporation, 108-0075 Tokyo (JP)
(72) Inventor: UCHIYAMA, Hiromasa, Tokyo 108-0075 (JP); KUSASHIMA, Naoki, Tokyo 108-0075 (JP); MATSUDA, Hiroki, Tokyo 108-0075 (JP)
(74) Representative: Witte, Weller & Partner Patentanwälte mbB
(86) International application number: PCT/JP2019/045374
(87) International publication number: WO 2020/144944

(56) References cited:
- EP-A1- 3 823 388
- WO-A1-2017/202230
- JP-A- 2000 253 445
- JP-A- 2012 090 283
- JP-A- 2012 124 585
- JP-A- 2013 021 603
- JP-A- 2017 508 377
- HUAWEI ET AL: "On resource coordination and dynamic scheduling in IAB", 16 November 2018 (2018-11-16), pages 1 - 5, XP051478357, Retrieved from the Internet <URL:http://www.3gpp.org/ftp/tsg%5Fran/WG1%5FRL1/TSGR1%5F95/Docs/R1%2D1812201%2Ezip>
- CATT: "NR Physical Layer design for IAB backhaul link", vol. RAN WG1, no. Gothenburg, Sweden; 20180820 - 20180824, 11 August 2018 (2018-08-11), XP051515780, Retrieved from the Internet <URL:http://www.3gpp.org/ftp/tsg%5Fran/WG1%5FRL1/TSGR1%5F94/Docs/R1%2D1808398%2Ezip> [retrieved on 20180811]
- NOKIA ET AL: "Resource allocation/coordination between Parent BH and Child links", 16 November 2018 (2018-11-16), pages 1 - 11, XP051478946, Retrieved from the Internet <URL:http://www.3gpp.org/ftp/tsg%5Fran/WG1%5FRL1/TSGR1%5F95/Docs/R1%2D1812702%2Ezip>

## Description

### Field

The present disclosure relates to a communication control device, a communication control method, and a computer program.

### Background

In recent years, development related to Internet of Things (IoT) has been actively performed. In IoT, since various objects are connected to a network to exchange information, wireless communication has become an important technical theme. Therefore, in Third Generation Partnership Project (3GPP), communication for IoT that realizes small packets, low power consumption, or low cost, such as Machine Type Communication (MTC) and Narrow Band IoT (NB-IoT), has been standardized.

In the communication for IoT, it is desirable to secure wide coverage with as low power consumption as possible. However, typically, since there is a trade-off relation between power consumption and coverage, securing the wide coverage inevitably increases the power consumption. Therefore, as one of technologies for achieving both the low power consumption and the wide coverage, communication relay by a relay node having an entity such as a base station has been examined.

For example, Patent Literature 1 below discloses technology for causing a terminal device inside a cell to relay communication between a terminal device outside the cell and a base station.

Further, in recent years, communication called an Integrated Access and Backhaul link (IAB) has been proposed for the purpose of integrating backhaul links and access links, and communication relay has been examined even in the IAB.

### Citation List

### Patent Literature

Patent Literature 1: JP 2016-96489 A

### Non-Patent Literature

HUAWEI ET AL: "On resource coordination and dynamic scheduling in IAB", 3GPP DRAFT; Rl-1812201, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; France 16 November 2018, discusses resource coordination and dynamic scheduling in IAB.
CATT: "NR Physical Layer design for IAB backhaul link", 3GPP DRAFT; R1-1808398_IAB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE vol. RAN WG1, no. Gothenburg, Sweden; 11 August 2018, discusses NR Physical Layer design for IAB backhaul link.
NOKIA ET AL: "Resource allocation/coordination between Parent BH and Child links", 3GPP DRAFT; Rl-1812702, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE 16 November 2018, discusses Resource allocation/coordination between Parent BH and Child links.

### Summary

### Technical Problem

When a terminal that relays communication, such as a relay node, has mobility, a local environment changes more dynamically, so that it is expected that a wireless communication environment also greatly changes due to factors such as reflection and interference. Therefore, resource allocation considering the change is required.

Therefore, the present disclosure proposes a new and improved communication control device, communication control method, and computer program capable of performing efficient resource allocation considering a change in the local environment, in consideration of a case where a terminal relaying communication has mobility.

### Solution to Problem

According to the present disclosure, there is provided a communication control device and a corresponding method according to the appended claims. Further embodiments are disclosed in the dependent claims.

### Brief Description of Drawings

FIG. 1 is an explanatory diagram illustrating an outline of an IAB.
FIG. 2 is an explanatory diagram illustrating an example of an IAB use case.
FIG. 3 is an explanatory diagram illustrating an example of an IAB architecture.
FIG. 4 is an explanatory diagram illustrating a relation between IAB-nodes.
FIG. 5 is a block diagram illustrating an example of a configuration of a communication control device according to the present embodiment.
FIG. 6 is a block diagram illustrating an example of a configuration of a terminal device according to the present embodiment.
FIG. 7 is an explanatory diagram illustrating an outline of the operation of a communication control device according to an embodiment of the present disclosure.
FIG. 8 is an explanatory diagram illustrating an outline of the operation of the communication control device according to the embodiment of the present disclosure.
FIG. 9A is a flowchart illustrating an operation example of the embodiment of the present disclosure.
FIG. 9B is a flowchart illustrating an operation example of the embodiment of the present disclosure.
FIG. 10 is a flowchart illustrating an operation example of the embodiment of the present disclosure.
FIG. 11 is a block diagram illustrating a first example of a schematic configuration of an eNB.
FIG. 12 is a block diagram illustrating a second example of the schematic configuration of the eNB.
FIG. 13 is a block diagram illustrating an example of a schematic configuration of a smartphone.
FIG. 14 is a block diagram illustrating an example of a schematic configuration of a car navigation device.

### Description of Embodiments

Hereinafter, preferred embodiments of the present disclosure will be described in detail with reference to the appended drawings. Note that, in the present specification and the drawings, redundant description of components having substantially the same functional configuration is omitted by assigning the same reference numerals.

Note that the description will be given in the following order.
1. Embodiment of present disclosure
1.1. Background
1.2. Configuration example
1.3. Operation example
2. Application example
3. Conclusion

### <1. Embodiment of present disclosure>

### [1.1. Background]

Before explaining an embodiment of the present disclosure in detail, first, a background to the embodiment of the present disclosure will be described.

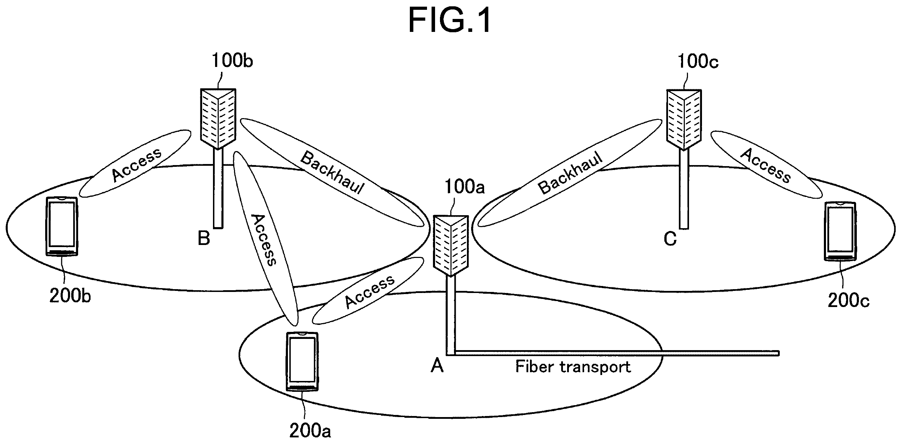

In recent years, communication called an IAB is proposed for the purpose of integrating backhaul links and access links. FIG. 1 is an explanatory diagram illustrating an outline of the IAB. FIG. 1 illustrates three base stations 100a, 100b, and 100c and terminals 200a, 200b, and 200c communicating with the base stations 100a, 100b, and 100c, respectively. The base station 100a is connected to a core network by an optical fiber cable and has a backhaul link established with the base stations 100b and 100c. In the example of FIG. 1, the terminal 200a has an access link established not only with the base station 100a but also with the base station 100b.

Communication relay is examined even at the IAB. In the IAB, not only conventional time division multiplexing (TDM) but also frequency division multiplexing (FDM) and space division multiplexing (SDM) are used to cause the backhaul link and the access link to be orthogonal. The IAB assumes communication using millimeter waves in particular. Coverage becomes a problem in the communication using the millimeter waves. However, by using the relay communication such as the IAB, it is possible to efficiently expand the coverage in the communication using the millimeter waves. Multi-hops are also assumed in the IAB, and mesh type arrangement is also assumed.

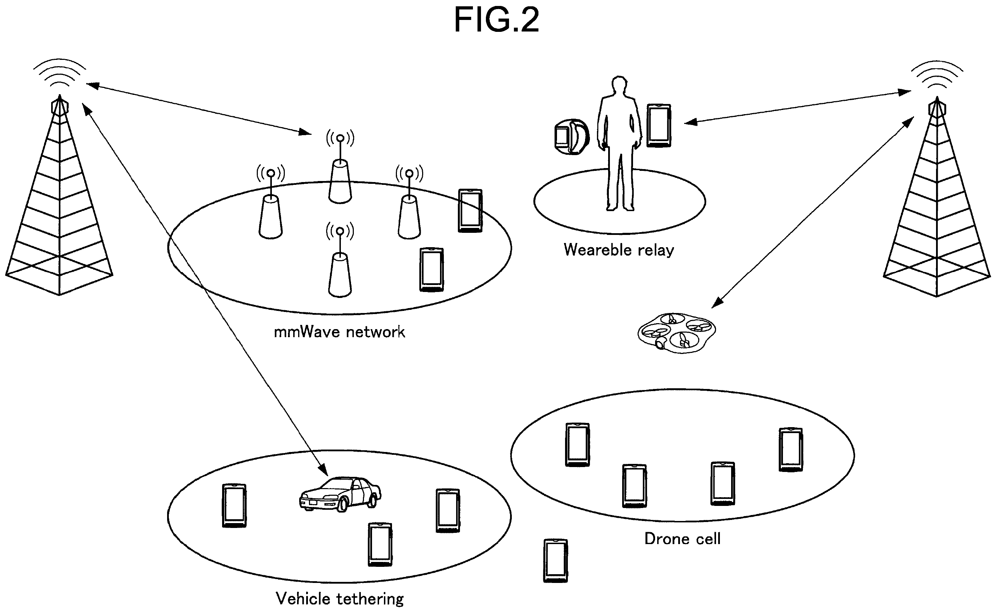

FIG. 2 is an explanatory diagram illustrating an example of an IAB use case. The IAB can be applied not only to a network configuration using millimeter-wave communication, but also vehicle tethering with an IAB node loaded on a vehicle, a moving cell with an IAB node loaded on an electric train, a drone cell with an IAB node loaded on a flying object such as a drone, and the like. In addition, it is assumed that the IAB is applied to communication for IoT. In particular, the IAB can also be applied to wearable tethering communication connecting a smartphone and a wearable device and the like. In addition, the IAB can also be applied to other areas such as medicine and factory automation. Of course, the use cases illustrated in FIG. 2 are only examples, and the IAB can be applied to use cases other than those illustrated in FIG. 2.

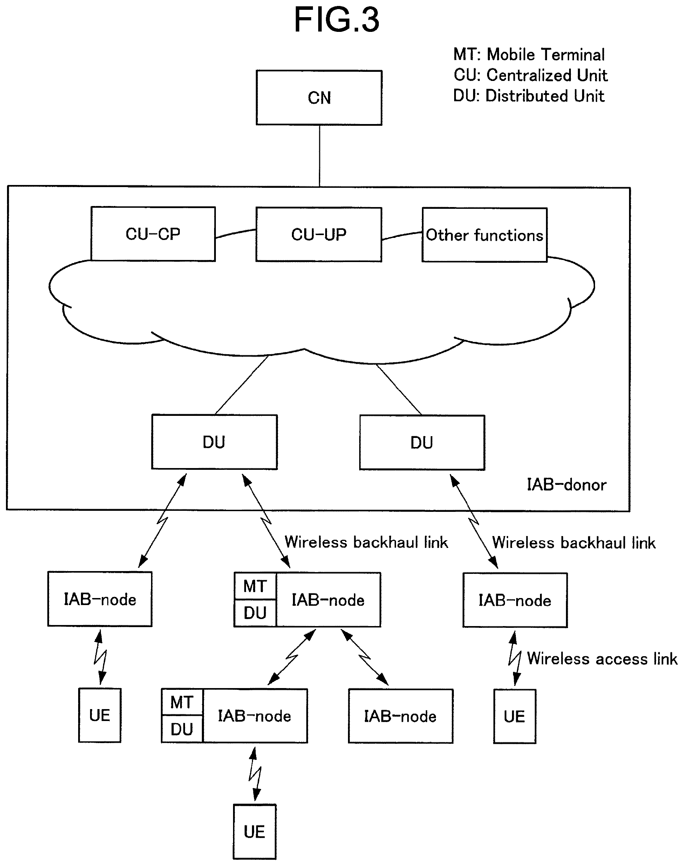

FIG. 3 is an explanatory diagram illustrating an example of an IAB architecture. An IAB-donor is supposed to be a base station like a gNB and is connected to a core network (CN). The IAB-donor has a central function (centralized unit (CU)) and a base station function (distributed unit (DU)). There are IAB-nodes (relay nodes) under the IAB-donor, and the IAB-nodes are connected wirelessly while forming a plurality of multi-hops. Each IAB-node connects to a user terminal (UE) with an access link. The IAB-node may be connected to a plurality of IAB-nodes to improve redundancy of a backhaul link. The IAB-node includes a user terminal function (mobile terminal (MT)) and a base station function (distributed unit (DU)). That is, in the backhaul link, the IAB-node operates as the MT at the time of downlink reception and uplink transmission, and the IAB-node operates as the DU at the time of downlink transmission and uplink reception. From the user terminal, since the IAB-node looks like a normal base station, even legacy terminals can connect to an IAB network. Note that the IAB-node is not limited to the case where it includes the MT and the DU. The IAB-node may include an MT that receives a downlink from an upper IAB-node and an MT that transmits a side link.

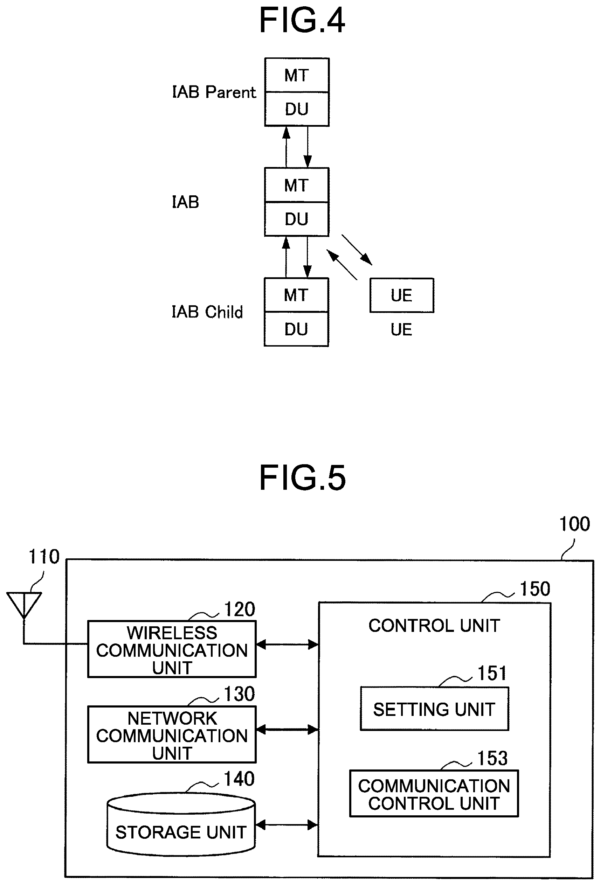

The IAB-node may have both DU and MT functions. In that case, since the uplink transmission of the IAB node operates as the MT, an uplink resource to be used is allocated by a parent IAB-node. On the other hand, since the downlink transmission of the IAB node operates as the DU, a downlink resource to be used is allocated by an own IAB-node. FIG. 4 is an explanatory diagram illustrating a relation between IAB-nodes. The IAB-node normally has a link between an IAB-parent to be a parent IAB and an IAB-child to be a child IAB. The IAB-node also has a link with a normal user terminal. A link between IABs is a backhaul link, and a link for user terminals is an access link.

When resources are allocated, it is first necessary to define a resource administrator. In the IAB, a centralized manner in which the IAB-donor allocates all resources, a distributed manner in which the IAB-Node manages resources by itself, and a hierarchal manner in which the parent IAB-node manages resources of the child IAB-node are mentioned. The centralized manner, the distributed manner, and the hierarchal manner may be used in combination. For example, the IAB-donor may determine the frame format configurations of the uplink and the downlink to some extent, leave an area that can be set in each IAB-node, and rewrite the frame format at the discretion of each IAB-node.

In the IAB, it is conceivable that the IAB-node has mobility in the future. In this case, since the local environment changes more dynamically, it is expected that the wireless communication environment will also greatly change due to factors such as radio wave reflection and interference. On the other hand, in the IAB resource allocation, it is expected that the slot format will be set by the IAB-donor to some extent and the uplink and downlink configurations will be determined.

The IAB-node performs communication using slot format setting specified by the IAB-donor. In this case, if a relatively large IAB network is assumed, the IAB-donor may not be able to correctly recognize a local wireless communication environment of the IAB-node. In other words, a more flexible resource allocation change is required for a local area. On the other hand, if the resource allocation such as the distributed manner is performed, adjustment between adjacent IAB-nodes may not be successful, and interference may occur. Therefore, a mechanism that can dynamically change allocation according to a local surrounding environment on the basis of the slot format set by the IAB-donor to some extent is required.

Therefore, as described below, a present discloser has devised technology that can dynamically change the allocation according to the local surrounding environment on the basis of the slot format set by the IAB-donor to some extent.

### [1.2. Configuration example]

### (1.2.1. Configuration example of communication control device)

FIG. 5 is a block diagram illustrating an example of a configuration of a communication control device 100 according to the present embodiment. The communication control device 100 is an example of the IAB-donor or the IAB-node. Referring to FIG. 5, the communication control device 100 includes an antenna unit 110, a wireless communication unit 120, a network communication unit 130, a storage unit 140, and a control unit 150.

### (1) Antenna unit 110

The antenna unit 110 radiates the signal output by the wireless communication unit 120 into a space as a radio wave. Further, the antenna unit 110 converts the radio wave in the space into a signal and outputs the signal to the wireless communication unit 120.

In particular, in the present embodiment, the antenna unit 110 has a plurality of antenna elements and can form a beam.

### (2) Wireless communication unit 120

The wireless communication unit 120 transmits and receives a signal. For example, the wireless communication unit 120 transmits a downlink signal to the terminal device and receives an uplink signal from the terminal device.

In particular, in the present embodiment, the wireless communication unit 120 can form a plurality of beams by the antenna unit 110 and communicate with the terminal device.

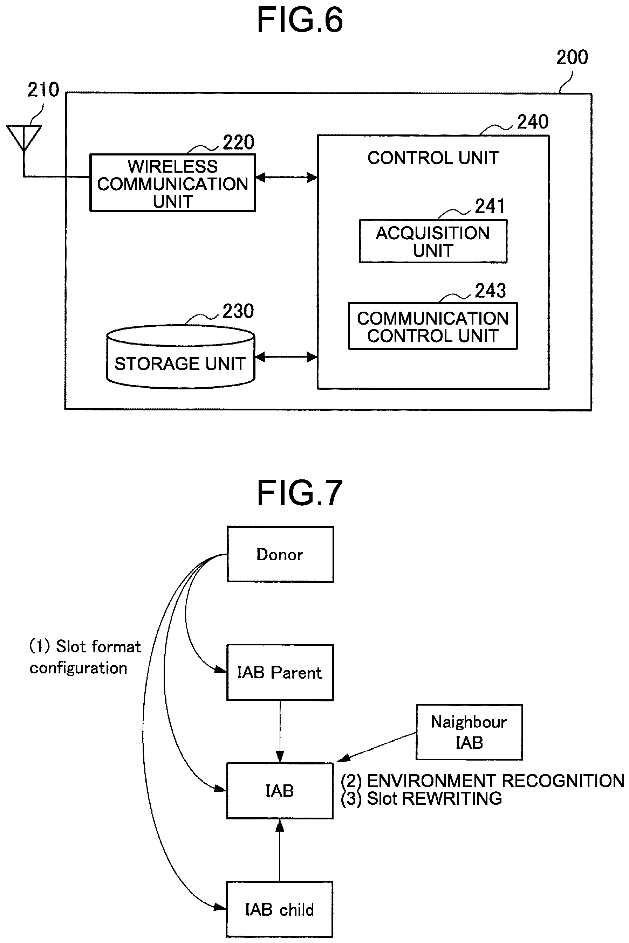

Here, in the present embodiment, the antenna unit 110 and the wireless communication unit 120 are configured to include the plurality of antenna panels 70 of the analogue-digital hybrid antenna architecture described above with reference to FIG. 6. For example, the antenna unit 110 corresponds to the antenna 72. Further, for example, the wireless communication unit 120 corresponds to the digital circuit 50, the analogue circuit 60, and the phase shifter 71.

### (3) Network communication unit 130

The network communication unit 130 transmits and receives information. For example, the network communication unit 130 transmits information to other node and receives information from other node. For example, other node includes other base station and core network node.

### (4) Storage unit 140

The storage unit 140 temporarily or permanently stores programs and various data for the operation of the communication control device 100.

### (5) Control unit 150

The control unit 150 controls the operation of the entire communication control device 100 and provides various functions of the communication control device 100. In the present embodiment, the control unit 150 is configured to include a setting unit 151 and a communication control unit 153.

The setting unit 151 performs various settings related to wireless communication between the communication control device 100 and another communication control device 100, or between the communication control device 100 and the terminal device 200. The communication control unit 153 executes communication control processing for transmitting a signal from the wireless communication unit 120 on the basis of the setting of the setting unit 151.

For example, the wireless communication unit 120 acquires information regarding slot setting and rewritable slots in the setting, and information regarding a radio wave environment around the own station, from another communication control device 100 (IAB-node). Therefore, the wireless communication unit 120 can function as an example of an acquisition unit of the present disclosure. The setting unit 151 selects a slot to be rewritten from the rewritable slots, on the basis of the information regarding the radio wave environment acquired by the wireless communication unit 120, and rewrites the slot. Then, the communication control unit 153 executes wireless communication on the basis of the slot rewritten by the setting unit 151.

The control unit 150 can further include other components other than these components. That is, the control unit 150 can perform operations other than the operations of these components.

### <1.2.2. Configuration example of terminal device>

FIG. 6 is a block diagram illustrating an example of a configuration of a terminal device 200 according to the present embodiment. Referring to FIG. 6, the terminal device 200 includes an antenna unit 210, a wireless communication unit 220, a storage unit 230, and a control unit 240.

### (1) Antenna unit 210

The antenna unit 210 radiates the signal output by the wireless communication unit 220 into the space as a radio wave. Further, the antenna unit 210 converts the radio wave in the space into a signal and outputs the signal to the wireless communication unit 220.

In particular, in the present embodiment, the antenna unit 210 has a plurality of antenna elements and can form a beam.

### (2) Wireless communication unit 220

The wireless communication unit 220 transmits and receives a signal. For example, the wireless communication unit 220 receives the downlink signal from the base station and transmits the uplink signal to the base station.

In particular, in the present embodiment, the wireless communication unit 220 can form a plurality of beams by the antenna unit 210 and communicate with the base station.

Here, in the present embodiment, the antenna unit 210 and the wireless communication unit 220 are configured to include the plurality of antenna panels 70 of the analogue-digital hybrid antenna architecture described above with reference to FIG. 6. For example, the antenna unit 210 corresponds to the antenna 72. Further, for example, the wireless communication unit 220 corresponds to the digital circuit 50, the analogue circuit 60, and the phase shifter 71.

### (3) Storage unit 230

The storage unit 230 temporarily or permanently stores programs and various data for the operation of the terminal device 200.

### (4) Control unit 240

The control unit 240 controls the operation of the entire terminal device 200 and provides various functions of the terminal device 200. In the present embodiment, the control unit 240 is configured to include an acquisition unit 241 and a communication control unit 243.

The acquisition unit 241 acquires the information transmitted from the communication control device 100 by wireless communication between the communication control device 100 and the terminal device 200. The communication control unit 243 executes communication control processing for transmitting a signal from the wireless communication unit 220 on the basis of the information acquired by the acquisition unit 241.

The control unit 240 can further include other components other than these components. That is, the control unit 240 can perform operations other than the operations of these components.

### [1.3. Operation example]

Subsequently, an operation example of the communication control device 100 according to the embodiment of the present disclosure will be described. In the communication control device 100 according to the embodiment of the present disclosure, the slot format setting set in the IAB-node is rewritten by using surrounding environment recognition.

FIG. 7 is an explanatory diagram illustrating an outline of the operation of the communication control device 100 according to the embodiment of the present disclosure. The communication control device 100 according to the embodiment of the present disclosure executes three operations of (1) slot format setting, (2) surrounding environment recognition, and (3) slot rewriting. Hereinafter, the operations of the communication control device 100 will be sequentially described.

### (1) Slot format setting

For the IAB-node, a slot format configuration is first set by the IAB-donor. At this time, the IAB-donor sets a UL/DL/F configuration semi-statically. In addition to the IAB-donor, settings may be performed by the IAB-parent or a representative node in the IAB-nodes.

The definition of the time resource is illustrated. In a case of a link for an MT viewpoint, that is, the IAB-parent, a downlink (DL) resource (D), an uplink (UL) resource (U), a side link (SL) resource (S), and a flexible resource (F) are included. The side link resource is a resource used for linking the IAB-node that becomes the MT. The flexible resource can include any resource of the downlink resource, the uplink resource, and the side link resource.

On the other hand, in a case of a DU viewpoint, that is, a link for IAB-child, a downlink (DL) resource, an uplink (UL) resource, a side link (SL) resource, and a flexible resource are included. The side link resource is a resource used for linking the IAB-node that becomes the MT. The flexible resource can include any resource of the downlink resource, the uplink resource, the side link resource, and Not available resources (resources that are not used for links for NA and IAB-child).

A slot format can be fixedly allocated on the IAB-donor side, but a mechanism is required that allows the IAB-node side to have some degree of freedom and rewrites a slot configuration. Therefore, in the present embodiment, a new Hard/Soft concept is introduced at the time of allocating the slot format. Hard is a resource that is always available in the DU for IAB-child. On the other hand, Soft is a resource whose availability is explicitly and/or implicitly controlled by the IAB-parent in the DU for IAB-child. Further, the Hard may be a resource that cannot be rewritten by the IAB-node, and the Soft may be a resource that can be rewritten by the IAB-node.

### (2) Surrounding environment recognition

In the present embodiment, the IAB-node dynamically rewrites the slot format in the IAB-node by recognizing the surrounding environment. In particular, in the present embodiment, the IAB-node can rewrite the slot format for a slot allocated as Soft (rewritable slot). Measurement for environment recognition may be configured from the IAB-donor to the IAB-node, or may be pre-configured to the IAB-node. The configuration from the IAB-donor is set, for example, using RRC signaling. The IAB-node sets a measurement interval, a measurement width, a measurement target (a measurement target band, a measurement target IAB-node, and the like), and the like as a measurement window.

A transmission cycle of signaling for the surrounding environment recognition and transmission triggering may be set by the IAB-donor and notified to the IAB-node. The configuration from the IAB-donor is set using RRC signaling. For example, the IAB-donor may set a configuration of signaling for other IAB-nodes for the IAB-node.

Even when rewriting is not possible due to Hard allocation, the IAB-node can handle it by sending a resetting request to the IAB-donor side.

As an information acquisition link at the time of recognizing the surrounding environment, the IAB-node can have information obtained from the IAB-parent (IAB-node connected by the uplink), information obtained from the IAB-child (IAB-node connected by the downlink), information obtained from the neighbor IAB (IAB-node connected by the side link or IAB-node not linked to the own station), information obtained from the surrounding wireless environment, and the like. As the information obtained from these links, the IAB-node can obtain allocated slot format information, slot format information currently used, and slot format information to be used in the future (including rewriting schedule information).

Further, as the information obtained from these links, the IAB-node can obtain position information of the IAB-node, a received power level, reference signals received power (RSRP), received signal strength Indication (RSSI), and reference signal received quality (RSRQ). Further, as the information obtained from these links, the IAB-node can obtain an interference level of radio waves and a radio frequency use rate (how much a resource is used with respect to an allocated frequency resource).

Further, as the information obtained from these links, the IAB-node can obtain whether or not a location is a frequency use location (that is, a position of the frequency resource) in order to consider in-band emission. Further, as the information obtained from these links, the IAB-node can obtain the number of link hops (how many hops the node is counted from the IAB-donor).

Further, as the information obtained from these links, the IAB-node can obtain information regarding beamforming. The information regarding beamforming can include a beamforming direction, precoding used, rank indicator information, a MIMO mode, the number of antennas, and the like. The IAB-node uses the information regarding beamforming to obtain information regarding a space in which the beam is used in particular.

Further, as the information obtained from these links, the IAB-node can obtain information regarding occurrence of interference in other communication control devices, for example, information regarding ACK/NACK. The information regarding ACK/NACK is used for the IAB-node to recognize how much interference occurs depending on a ratio of ACK/NACK.

Further, as the information obtained from these links, the IAB-node can obtain capability information of the IAB-node (IAB-capability information). The IAB-capability information can include, for example, whether or not there is the ability to perform spatial division multiplexing (SDM), whether or not there is the ability to perform frequency division multiplexing (FDM), the number of MIMO streams used, the number of surplus MIMO streams, backhaul link thickness information (bandwidth, capacity, redundancy, communication speed, and the like), access link thickness information (bandwidth, redundancy, capacity, communication speed, and the like), and the like.

Further, as the information obtained from these links, the IAB-node can obtain traffic information and packet information that are communicated. The traffic information and packet information that are communicated can include, for example, priority information, a traffic amount, and the like.

### (3) Slot rewriting

The IAB-node recognizes the surrounding environment and executes slot rewriting when it is necessary to rewrite the set slot format. That is, the IAB-node rewrites the slot assigned as Soft to any one of D/U/S/F/NA as necessary.

When the IAB-node rewrites the slot, a rewritten result may be notified to the IAB-donor or other IAB-nodes. The IAB-node may rewrite the slot to Semi-persistent. In other words, the IAB-node may set an available period and notify the IAB-donor or other IAB-nodes of the available period.

At the time of rewriting the slot, the IAB-node may select a slot to be rewritten according to a ratio of the D slots to the U slots. For example, if the number of D slots is larger, the IAB-node may rewrite the rewritable D slot to the U slot. The IAB-node may also change a frequency resource used at the time of rewriting the slot. Further, the IAB-node may also change the beamforming setting at the time of rewriting the slot.

At the time of writing the slot, the IAB-node may perform rewriting in consideration of the priority of the link. For example, the IAB-node may determine the priority using information having the high priority that should be sent and rewrite the slot according to the determined priority. Further, for example, the IAB-node may determine which is prioritized with other IAB-nodes and rewrite the slot on the basis of the priority. Further, for example, when it is necessary to execute a handover or a specific procedure, the IAB-node may rewrite the slot on the basis of the processing to be executed.

At the time of rewriting the slot, the IAB-node may rewrite the traffic by QoS. Further, at the time of rewriting the slot, the IAB-node may perform rewriting so as to decrease a packet error rate. Further, at the time of rewriting the slot, the IAB-node may rewrite the slot so as to minimize its own interference and execute pattern rewriting. Further, at the time of rewriting the slot, the IAB-node may perform rewriting so as to minimize interference with an IAB-node or a terminal device of a communication partner. Further, at the time of rewriting the slot, the IAB-node may perform rewriting so as to maximize the capacity of the network.

Further, at the time of rewriting the slot, the IAB-node may perform rewriting for the purpose of backhaul link switching. That is, when a plurality of IAB-nodes and the backhaul links are connected, in order to preferentially use one of the backhaul links, the IAB-node may adjust the slots between the links and perform rewriting.

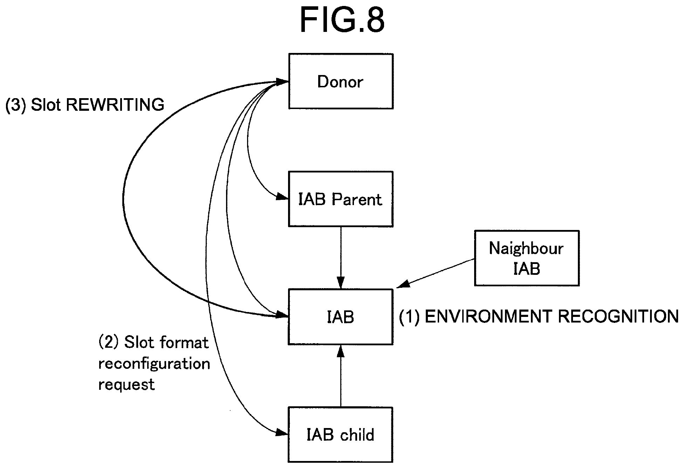

FIG. 8 is an explanatory diagram illustrating an outline of the operation of the communication control device 100 according to the embodiment of the present disclosure. FIG. 8 illustrates an outline of a case where the IAB-node transmits a slot format reconfiguration request to the IAB-donor.

The IAB-node first executes environment recognition and determines whether or not the slot format needs to be rewritten. As a result of executing the environment recognition, when rewriting is necessary and handling is enabled by rewriting the slot format, the IAB-node rewrites the slot format.

On the other hand, when it is determined that handling is insufficient in only rewriting of the slot format, the IAB-node transmits a slot format reconfiguration request to the IAB-donor (which may be a parent or a representative of a plurality of parents). After that, the slot format is updated by the IAB-donor, and the slot format is reallocated to the IAB node.

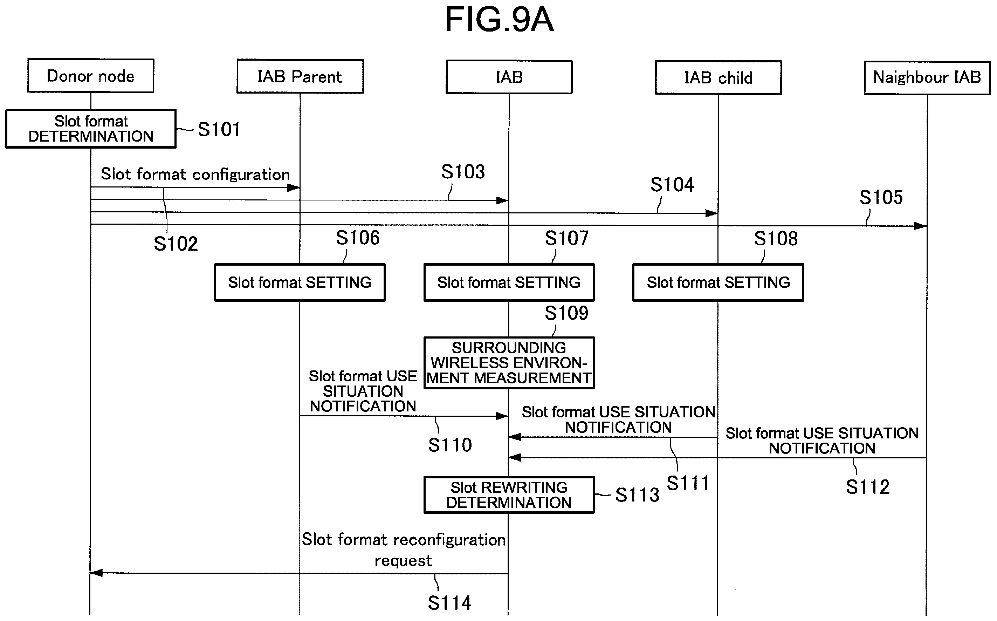

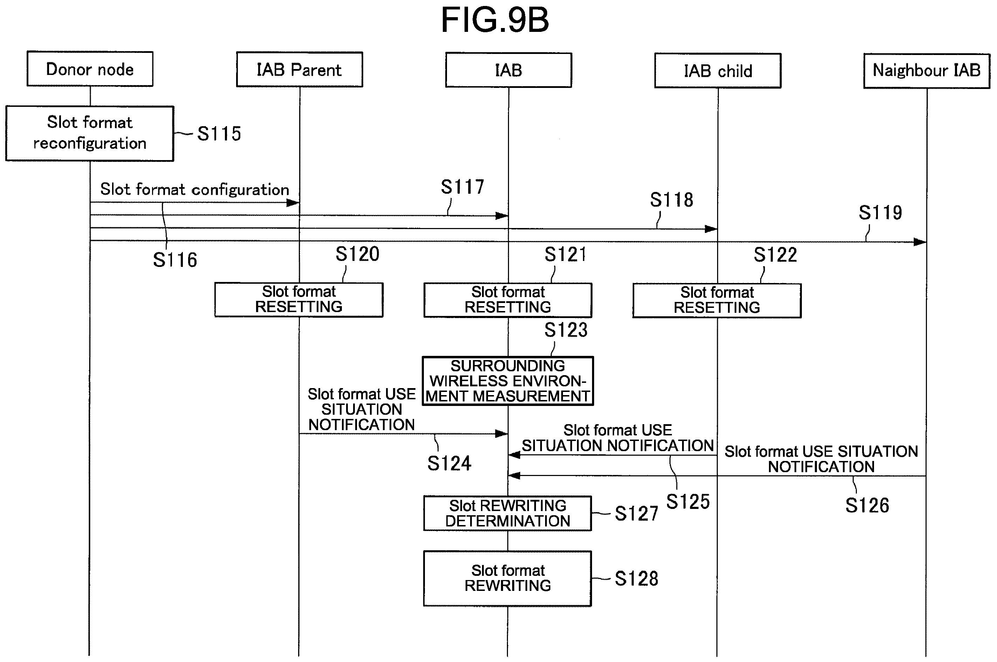

FIGS. 9A and 9B are flowcharts illustrating operation examples according to the embodiment of the present disclosure. First, a node that is the IAB-donor determines the slot format (step S101), and notifies the IAB-Parent, the IAB-node, the IAB-child, and the Neighbor IAB-node of the determined slot format (steps S102, S103, S104, and S105).

The IAB-Parent, the IAB-node, and the IAB-child that are notified of the slot format by the IAB-donor set the slot format according to the notification (steps S106, S107, and S108).

After that, the IAB-node measures the surrounding wireless environment (step S109). Further, the IAB-node receives a notification of a use situation of the slot format from the IAB-Parent, the IAB-child, and the Neighbor IAB-node (steps S110, S111, and S112). Then, the IAB-node performs rewriting determination of the slot format on the basis of the measurement result of the surrounding wireless environment or the notification of the use situation of the slot format (step S113).

Then, when it is determined that handling is insufficient in only rewriting of the slot format, the IAB-node transmits a slot format reconfiguration request to the IAB-donor (step S114).

The IAB-donor reconfigures the slot format on the basis of the slot format reconfiguration request from the IAB-node (step S115), and notifies the IAB-Parent, the IAB-node, the IAB-child, and the Neighbor IAB-node of the reconfigured slot format (steps S116, S117, S118, and S119).

The IAB-Parent, the IAB-node, and the IAB-child that are notified of the slot format by the IAB-donor set the slot format according to the notification (steps S120, S121, and S122).

After that, the IAB-node measures the surrounding wireless environment (step S123). Further, the IAB-node receives a notification of a use situation of the slot format from the IAB-Parent, the IAB-child, and the Neighbor IAB-node (steps S124, S125, and S126). Then, the IAB-node performs rewriting determination of the slot format on the basis of the measurement result of the surrounding wireless environment or the notification of the use situation of the slot format (step S127).

Then, when it is determined that handling is sufficient in only rewriting of the slot format, the IAB-node rewrites the allocated slot format (step S128). At this time, the IAB-node rewrites the slot format for the slot allocated as Soft (rewritable slot).

In the examples illustrated in FIGS. 9A and 9B, the wireless environment measurement around the IAB-node and the use situations of the slot formats of the parent IAB-node, the child IAB-node, and the peripheral IAB-node are obtained as the environment recognition. However, this is just an example, and the IAB-node may obtain other information as described above.

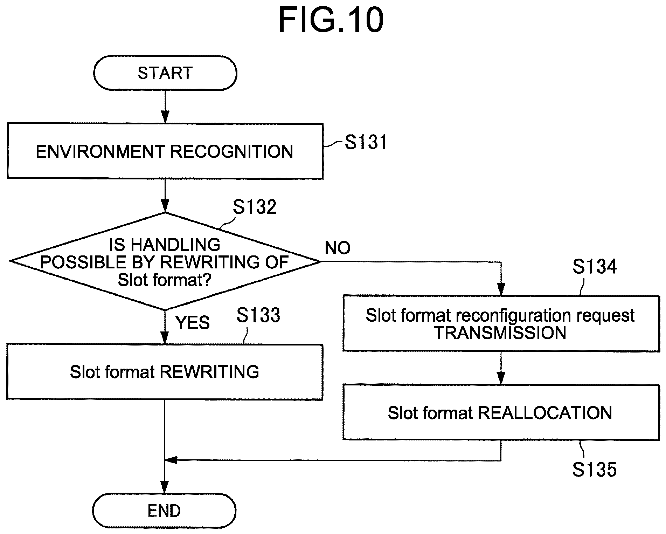

FIG. 10 is a flowchart illustrating an operation example of the communication control device 100 according to the embodiment of the present disclosure. Here, an operation example when the communication control device 100 operates as the IAB-node is illustrated.

The IAB-node first executes environment recognition (step S131) and determines whether or not handling is possible by rewriting of the slot format (step S132). As a result of the determination in step S132, when handling is possible by rewriting of the slot format (step S132, Yes), the IAB-node rewrites the slot format (step S133).

On the other hand, when it is determined that handling is impossible in only rewriting of the slot format (step S132, No), the IAB-node transmits a slot format reconfiguration request to the IAB-donor (which may be a parent or a representative of a plurality of parents) (step S134). After that, the slot format is updated by the IAB-donor, and the slot format is reallocated to the IAB node (step S135).

### <2. Application example>

The technology according to the present disclosure can be applied to various products.

For example, the communication control device 100 may be realized as any type of evolved Node B (eNB) such as a macro eNB or a small eNB. The small eNB may be an eNB that covers cells smaller than the macro cell, such as a pico eNB, a micro eNB, or a home (femto) eNB. Instead, the communication control device 100 may be realized as another type of base station such as NodeB or a base transceiver station (BTS). The communication control device 100 may include a main body (also called a base station device) that controls wireless communication, and one or more remote radio heads (RRHs) disposed at a location different from a location of the main body. Further, various types of terminals, which will be described later, may operate as the communication control device 100 by temporarily or semi-permanently executing a base station function.

Further, for example, the terminal device 200 may be realized as a smartphone, a tablet personal computer (PC), a notebook PC, a portable game terminal, a mobile terminal such as a portable/dongle type mobile router or a digital camera, or an in-vehicle terminal such as a car navigation device. Further, the terminal device 200 may be realized as a terminal (also called a machine type communication (MTC) terminal) that performs machine To machine (M2M) communication. Further, the terminal device 200 may be a wireless communication module (for example, an integrated circuit module composed of one die) mounted on the terminal.

### [2.1. Application example related to base station]

### (First application example)

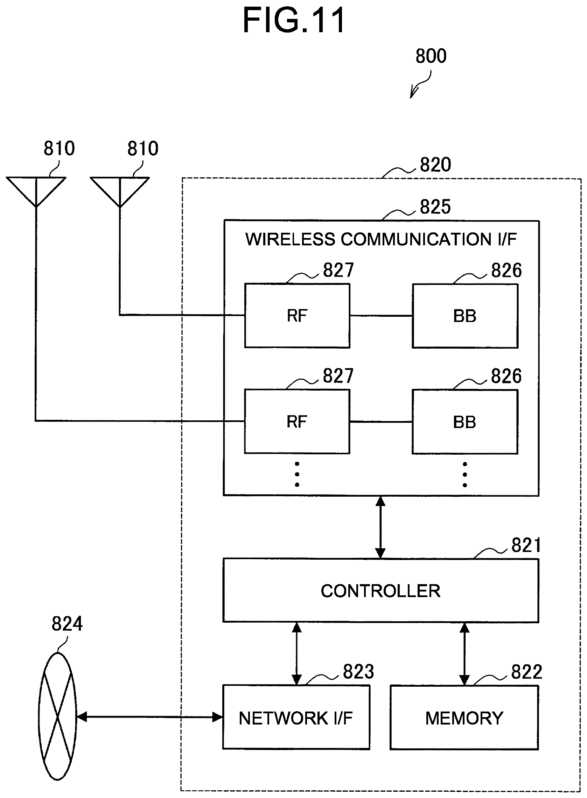

FIG. 11 is a block diagram illustrating a first example of a schematic configuration of an eNB to which the technology according to the present disclosure can be applied. An eNB 800 has one or more antennas 810 and a base station device 820. Each antenna 810 and the base station device 820 can be connected to each other via an RF cable.

Each of the antennas 810 has one or more antenna elements (for example, a plurality of antenna elements forming a MIMO antenna) and is used for transmission and reception of radio signals by the base station device 820. The eNB 800 has a plurality of antennas 810 as illustrated in FIG. 11, and the plurality of antennas 810 may correspond to a plurality of frequency bands used by the eNB 800, for example. Although FIG. 11 illustrates an example in which the eNB 800 has the plurality of antennas 810, the eNB 800 may have a single antenna 810.

The base station device 820 includes a controller 821, a memory 822, a network interface 823, and a wireless communication interface 825.

The controller 821 may be, for example, a CPU or DSP and operates various functions of upper layers of the base station device 820. For example, the controller 821 generates a data packet from data in a signal processed by the wireless communication interface 825 and transfers the generated packet via the network interface 823. The controller 821 may generate a bundled packet by bundling data from a plurality of baseband processors and transfer the generated bundled packet. Further, the controller 821 may have a logical function that executes control such as radio resource control, radio bearer control, mobility management, admission control, or scheduling. Further, the control may be executed in cooperation with a peripheral eNB or core network node. The memory 822 includes a RAM and a ROM, and stores a program executed by the controller 821 and various control data (for example, a terminal list, transmitted power data, scheduling data, and the like).

The network interface 823 is a communication interface for connecting the base station device 820 to the core network 824. The controller 821 may communicate with the core network node or other eNB via the network interface 823. In that case, the eNB 800 and the core network node or other eNB may be connected to each other by a logical interface (for example, an S1 interface or an X2 interface). The network interface 823 may be a wired communication interface or a wireless communication interface for a wireless backhaul. When the network interface 823 is a wireless communication interface, the network interface 823 may use a higher frequency band than a frequency band used by the wireless communication interface 825 for wireless communication.

The wireless communication interface 825 supports a cellular communication system such as Long Term Evolution (LTE) or LTE-Advanced, and provides wireless connection to a terminal located in the cell of the eNB 800 via the antenna 810. The wireless communication interface 825 can typically include baseband (BB) processors 826 and RF circuits 827. The BB processor 826 may perform, for example, encoding/decoding, modulation/demodulation, and multiplexing/demultiplexing, and executes various signal processing of each layer (for example, L1, Medium Access Control (MAC), Radio Link Control (RLC), and Packet Data Convergence Protocol (PDCP)). The BB processor 826 may have some or all of the above-mentioned logical functions instead of the controller 821. The BB processor 826 may be a module including a memory for storing a communication control program, a processor for executing the program, and related circuits, and the functions of the BB processor 826 may be changed by updating the above program. Further, the module may be a card or a blade inserted into a slot of the base station device 820, or may be a chip mounted on the card or the blade. On the other hand, the RF circuit 827 may include a mixer, a filter, and an amplifier, and transmits and receives radio signals via the antenna 810.

The wireless communication interface 825 includes a plurality of BB processors 826 as illustrated in FIG. 11, and the plurality of BB processors 826 may correspond to a plurality of frequency bands used by the eNB 800, for example. Further, the wireless communication interface 825 includes a plurality of RF circuits 827 as illustrated in FIG. 11, and the plurality of RF circuits 827 may correspond to, for example, a plurality of antenna elements. Although FIG. 11 illustrates an example in which the wireless communication interface 825 includes the plurality of BB processors 826 and the plurality of RF circuits 827, the wireless communication interface 825 may include a single BB processor 826 or a single RF circuit 827.

In the eNB 800 illustrated in FIG. 11, one or more components (the setting unit 151 and/or the communication control unit 153) included in the control unit 150 described with reference to FIG. 5 may be mounted in the wireless communication interface 825. Alternatively, at least some of these components may be mounted in the controller 821. As an example, the eNB 800 may be equipped with a module including a part (for example, the BB processor 826) or all of the wireless communication interface 825 and/or the controller 821, and one or more of the above components may be mounted in the module. In this case, the module may store a program for causing the processor to function as one or more of the above components (in other words, a program for causing the processor to perform the operations of one or more of the above components), and may execute the program. As another example, the program for causing the processor to function as one or more of the above components may be installed in the eNB 800, and the wireless communication interface 825 (for example, the BB processor 826) and/or the controller 821 may execute the program. As described above, the eNB 800, the base station device 820, or the module may be provided as a device including one or more of the above components, and the program for causing the processor to function as one or more of the above components may be provided. Further, a readable recording medium on which the above program has been recorded may be provided.

Further, in the eNB 800 illustrated in FIG. 11, the wireless communication unit 120 described with reference to FIG. 5 may be mounted in the wireless communication interface 825 (for example, the RF circuit 827). Further, the antenna unit 110 may be mounted in the antenna 810. Further, the network communication unit 130 may be mounted in the controller 821 and/or the network interface 823. Further, the storage unit 140 may be mounted in the memory 822.

### (Second application example)

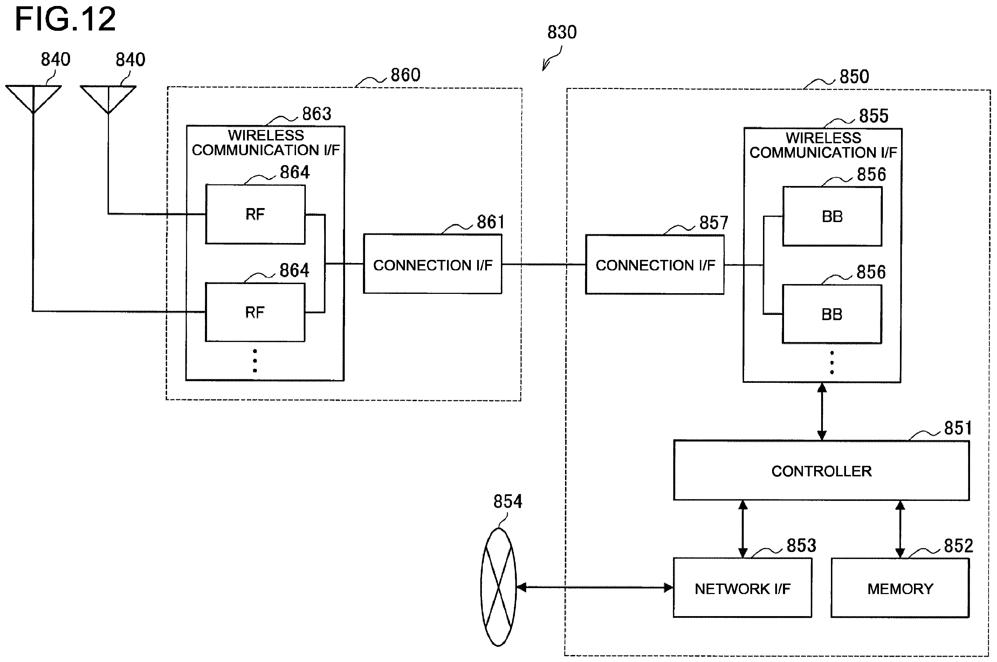

FIG. 12 is a block diagram illustrating a second example of a schematic configuration of an eNB to which the technology according to the present disclosure can be applied. An eNB 830 has one or more antennas 840, a base station device 850, and an RRH 860. Each antenna 840 and the RRH 860 may be connected to each other via an RF cable. Further, the base station device 850 and the RRH 860 can be connected to each other by a high-speed line such as an optical fiber cable.

Each of the antennas 840 has one or more antenna elements (for example, a plurality of antenna elements forming a MIMO antenna) and is used for transmission and reception of radio signals by the RRH 860. The eNB 830 has a plurality of antennas 840 as illustrated in FIG. 12, and the plurality of antennas 840 may correspond to a plurality of frequency bands used by the eNB 830, for example. Although FIG. 12 illustrates an example in which the eNB 830 has the plurality of antennas 840, the eNB 830 may have a single antenna 840.

The base station device 850 includes a controller 851, a memory 852, a network interface 853, a wireless communication interface 855, and a connection interface 857. The controller 851, the memory 852, and the network interface 853 are the same as the controller 821, the memory 822, and the network interface 823 described with reference to FIG. 19.

The wireless communication interface 855 supports a cellular communication system such as LTE or LTE-Advanced, and provides wireless connection to terminals located in a sector corresponding to the RRH 860 via the RRH 860 and the antenna 840. The wireless communication interface 855 can typically include BB processors 856 and the like. The BB processor 856 is the same as the BB processor 826 described with reference to FIG. 11, except that it is connected to an RF circuit 864 of the RRH 860 via the connection interface 857. The wireless communication interface 855 includes a plurality of BB processors 856 as illustrated in FIG. 12, and the plurality of BB processors 856 may correspond to a plurality of frequency bands used by the eNB 830, for example. Although FIG. 12 illustrates an example in which the wireless communication interface 855 includes the plurality of BB processors 856, the wireless communication interface 855 may include a single BB processor 856.

The connection interface 857 is an interface for connecting the base station device 850 (wireless communication interface 855) to the RRH 860. The connection interface 857 may be a communication module for communication on the high-speed line that connects the base station device 850 (wireless communication interface 855) and the RRH 860.

The RRH 860 further includes a connection interface 861 and a wireless communication interface 863.

The connection interface 861 is an interface for connecting the RRH 860 (wireless communication interface 863) to the base station device 850. The connection interface 861 may be a communication module for communication on the high-speed line.

The wireless communication interface 863 transmits and receives radio signals via the antenna 840. The wireless communication interface 863 can typically include RF circuits 864 and the like. The RF circuit 864 may include a mixer, a filter, and an amplifier, and transmits and receives radio signals via the antenna 840. As illustrated in FIG. 12, the wireless communication interface 863 includes a plurality of RF circuits 864, and the plurality of RF circuits 864 may correspond to, for example, a plurality of antenna elements. Although FIG. 12 illustrates an example in which the wireless communication interface 863 includes the plurality of RF circuits 864, the wireless communication interface 863 may include a single RF circuit 864.

In the eNB 830 illustrated in FIG. 12, one or more components (the setting unit 151 and/or the communication control unit 153) included in the control unit 150 described with reference to FIG. 5 may be mounted in the wireless communication interface 855 and/or the wireless communication interface 863. Alternatively, at least some of these components may be mounted in the controller 851. As an example, the eNB 830 may be equipped with a module including a part (for example, the BB processor 856) or all of the wireless communication interface 855 and/or the controller 851, and one or more of the above components may be mounted in the module. In this case, the module may store a program for causing the processor to function as one or more of the above components (in other words, a program for causing the processor to perform the operations of one or more of the above components), and may execute the program. As another example, the program for causing the processor to function as one or more of the above components may be installed in the eNB 830 and the wireless communication interface 855 (for example, the BB processor 856) and/or the controller 851 may execute the program. As described above, the eNB 830, the base station device 850, or the module may be provided as a device including one or more of the above components, and the program for causing the processor to function as one or more of the above components may be provided. Further, a readable recording medium on which the above program has been recorded may be provided.

Further, in the eNB 830 illustrated in FIG. 12, for example, the wireless communication unit 120 described with reference to FIG. 5 may be mounted in the wireless communication interface 863 (for example, the RF circuit 864). Further, the antenna unit 110 may be mounted in the antenna 840. Further, the network communication unit 130 may be mounted in the controller 851 and/or the network interface 853. Further, the storage unit 140 may be mounted in the memory 852.

[2.2. Application example related to terminal device]

### (First application example)

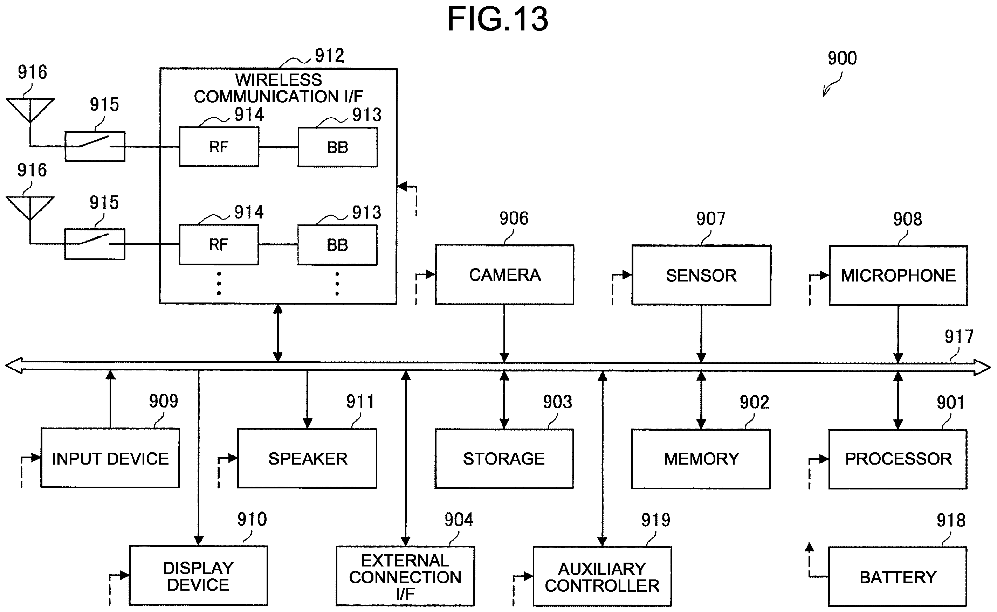

FIG. 13 is a block diagram illustrating an example of a schematic configuration of a smartphone 900 to which the technology according to the present disclosure can be applied. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 may be, for example, a CPU or a System on Chip (SoC), and controls functions of an application layer and other layers of the smartphone 900. The memory 902 includes a RAM and a ROM and stores programs and data executed by the processor 901. The storage 903 may include a storage medium such as a semiconductor memory or a hard disk. The external connection interface 904 is an interface for connecting an external device such as a memory card or a universal serial bus (USB) device to the smartphone 900.

The camera 906 has an imaging element such as a charge coupled device (CCD) or a complementary metal oxide semiconductor (CMOS), and generates an imaging image. The sensor 907 can include, for example, a group of sensors such as a positioning sensor, a gyro sensor, a geomagnetic sensor, and an acceleration sensor. The microphone 908 converts a voice input to the smartphone 900 into a voice signal. The input device 909 includes, for example, a touch sensor, a keypad, a keyboard, a button, or a switch that detects a touch on a screen of the display device 910, and receives an operation or information input from a user. The display device 910 has a screen such as a liquid crystal display (LCD) or an organic light emitting diode (OLED) display, and displays an output image of the smartphone 900. The speaker 911 converts the voice signal output from the smartphone 900 into a voice.

The wireless communication interface 912 supports a cellular communication system such as LTE or LTE-Advanced and performs wireless communication. The wireless communication interface 912 can typically include a BB processor 913 and an RF circuit 914. The BB processor 913 may perform, for example, encoding/decoding, modulation/demodulation, and multiplexing/demultiplexing, and performs various signal processing for wireless communication. On the other hand, the RF circuit 914 may include a mixer, a filter, and an amplifier, and transmits and receives radio signals via the antenna 916. The wireless communication interface 912 may be a one-chip module in which the BB processor 913 and the RF circuit 914 are integrated. The wireless communication interface 912 may include a plurality of BB processors 913 and a plurality of RF circuits 914 as illustrated in FIG. 13. Although FIG. 13 illustrates an example in which the wireless communication interface 912 includes the plurality of BB processors 913 and the plurality of RF circuits 914, the wireless communication interface 912 may include a single BB processor 913 or a single RF circuit 914.

Further, the wireless communication interface 912 may support other types of wireless communication systems such as a short-range wireless communication system, a near-field wireless communication system, or a wireless local area network (LAN) system, in addition to the cellular communication system. In that case, the BB processor 913 and the RF circuit 914 for each wireless communication system may be included.

Each of the antenna switches 915 switches the connection destination of the antenna 916 between a plurality of circuits included in the wireless communication interface 912 (for example, circuits for different wireless communication systems).

Each of the antennas 916 has one or more antenna elements (for example, a plurality of antenna elements forming a MIMO antenna) and is used for transmission and reception of radio signals by the wireless communication interface 912. The smartphone 900 may have a plurality of antennas 916 as illustrated in FIG. 13. Although FIG. 13 illustrates an example in which the smartphone 900 has the plurality of antennas 916, the smartphone 900 may have a single antenna 916.

Further, the smartphone 900 may include the antenna 916 for each wireless communication system. In that case, the antenna switch 915 may be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies power to each block of the smartphone 900 illustrated in FIG. 13 via a feed line partially illustrated by a broken line in the drawing. The auxiliary controller 919 operates minimum necessary functions of the smartphone 900, for example, in a sleep mode.

In the smartphone 900 illustrated in FIG. 13, one or more components (the acquisition unit 241 and/or the communication control unit 243) included in the control unit 240 described with reference to FIG. 6 may be mounted in the wireless communication interface 912. Alternatively, at least some of these components may be mounted in the processor 901 or the auxiliary controller 919. As an example, the smartphone 900 may be equipped with a module including a part (for example, the BB processor 913) or all of the wireless communication interface 912, the processor 901, and/or the auxiliary controller 919, and one or more of the above components may be mounted in the module. In this case, the module may store a program for causing the processor to function as one or more of the above components (in other words, a program for causing the processor to perform the operations of one or more of the above components), and may execute the program. As another example, the program for causing the processor to function as one or more of the above components may be installed in the smartphone 900 and the wireless communication interface 912 (for example, the BB processor 913), the processor 901, and/or the auxiliary controller 919 may execute the program. As described above, the smartphone 900 or the module may be provided as a device including one or more of the above components, and the program for causing the processor to function as one or more of the above components may be provided. Further, a readable recording medium on which the above program has been recorded may be provided.

Further, in the smartphone 900 illustrated in FIG. 13, for example, the wireless communication unit 220 described with reference to FIG. 6 may be mounted in the wireless communication interface 912 (for example, the RF circuit 914). Further, the antenna unit 210 may be mounted in the antenna 916. Further, the storage unit 230 may be mounted in the memory 902.

### (Second application example)

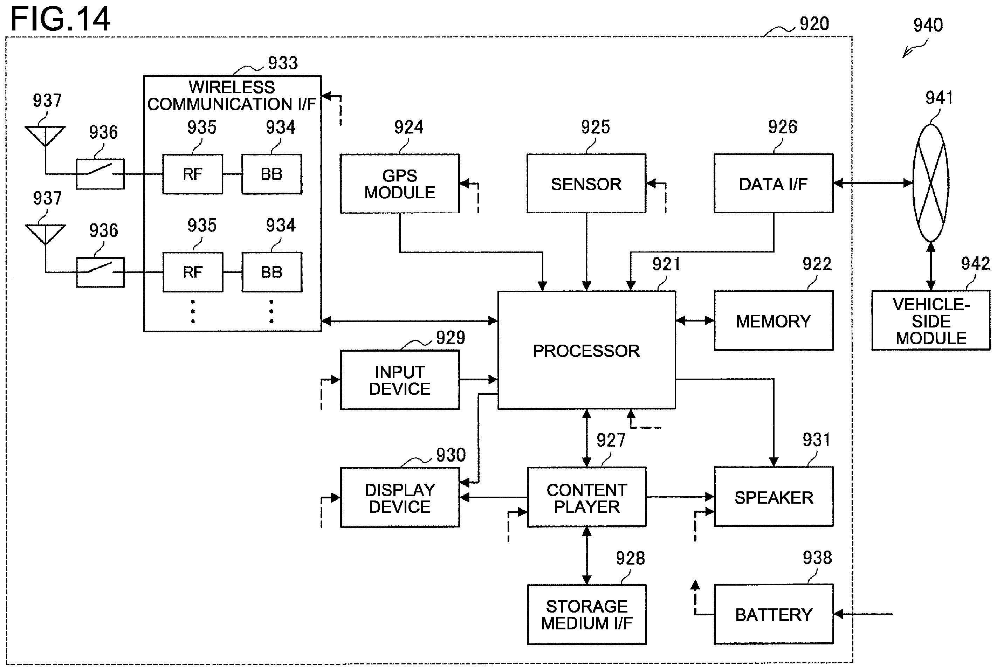

FIG. 14 is a block diagram illustrating an example of a schematic configuration of a car navigation device 920 to which the technology according to the present disclosure can be applied. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, one or more antenna switches 936, one or more antennas 937, and a battery 938.

The processor 921 may be, for example, a CPU or SoC, and controls a navigation function and other functions of the car navigation device 920. The memory 922 includes a RAM and a ROM and stores programs and data executed by the processor 921.

The GPS module 924 uses GPS signals received from GPS satellites to measure a position (for example, the latitude, the longitude, and the altitude) of the car navigation device 920. The sensor 925 may include, for example, a group of sensors such as a gyro sensor, a geomagnetic sensor, and a barometric pressure sensor. The data interface 926 is connected to an in-vehicle network 941 via a terminal (not illustrated), and acquires data generated on the vehicle side such as vehicle speed data.

The content player 927 plays contents stored in a storage medium (for example, a CD or a DVD) inserted into the storage medium interface 928. The input device 929 includes, for example, a touch sensor, a button, or a switch that detects a touch on the screen of the display device 930, and receives an operation or information input from the user. The display device 930 has a screen such as an LCD or OLED display and displays an image of a navigation function or contents to be played. The speaker 931 outputs a voice of the navigation function or the contents to be played.

The wireless communication interface 933 supports a cellular communication system such as LTE or LTE-Advanced and performs wireless communication. The wireless communication interface 933 can typically include BB processors 934 and RF circuits 935. The BB processor 934 may perform, for example, encoding/decoding, modulation/demodulation, and multiplexing/demultiplexing, and performs various signal processing for wireless communication. On the other hand, the RF circuit 935 may include a mixer, a filter, and an amplifier, and transmits and receives radio signals via the antenna 937. The wireless communication interface 933 may be a one-chip module in which the BB processor 934 and the RF circuit 935 are integrated. The wireless communication interface 933 may include a plurality of BB processors 934 and a plurality of RF circuits 935 as illustrated in FIG. 14. Although FIG. 14 illustrates an example in which the wireless communication interface 933 includes the plurality of BB processors 934 and the plurality of RF circuits 935, the wireless communication interface 933 may include a single BB processor 934 or a single RF circuit 935.

Further, the wireless communication interface 933 may support other types of wireless communication systems such as a short-range wireless communication system, a near-field wireless communication system, or a wireless LAN system, in addition to the cellular communication system. In that case, the BB processor 934 and the RF circuit 935 for each wireless communication system may be included.

Each of the antenna switches 936 switches the connection destination of the antenna 937 between a plurality of circuits included in the wireless communication interface 933 (for example, circuits for different wireless communication systems).

Each of the antennas 937 has one or more antenna elements (for example, a plurality of antenna elements forming a MIMO antenna) and is used for transmission and reception of radio signals by the wireless communication interface 933. The car navigation device 920 may have a plurality of antennas 937 as illustrated in FIG. 14. Although FIG. 14 illustrates an example in which the car navigation device 920 has the plurality of antennas 937, the car navigation device 920 may have a single antenna 937.

Further, the car navigation device 920 may include the antenna 937 for each wireless communication system. In that case, the antenna switch 936 may be omitted from the configuration of the car navigation device 920.

The battery 938 supplies power to each block of the car navigation device 920 illustrated in FIG. 14 via a feed line partially illustrated by a broken line in the drawing. Further, the battery 938 stores power supplied from the vehicle side.

In the car navigation device 920 illustrated in FIG. 14, one or more components (the acquisition unit 241 and/or the communication control unit 243) included in the control unit 240 described with reference to FIG. 6 may be mounted in the wireless communication interface 933. Alternatively, at least some of these components may be mounted in the processor 921. As an example, the car navigation device 920 may be equipped with a module including a part (for example, the BB processor 934) or all of the wireless communication interface 933 and/or the processor 921, and one or more of the above components may be mounted in the module. In this case, the module may store a program for causing the processor to function as one or more of the above components (in other words, a program for causing the processor to perform the operations of one or more of the above components), and may execute the program. As another example, the program for causing the processor to function as one or more of the above components may be installed in the car navigation device 920, and the wireless communication interface 933 (for example, the BB processor 934) and/or the processor 921 may execute the program. As described above, the car navigation device 920 or the module may be provided as a device including one or more of the above components, and the program for causing the processor to function as one or more of the above components may be provided. Further, a readable recording medium on which the above program has been recorded may be provided.

Further, in the car navigation device 920 illustrated in FIG. 14, for example, the wireless communication unit 220 described with reference to FIG. 6 may be mounted in the wireless communication interface 933 (for example, the RF circuit 935). Further, the antenna unit 210 may be mounted in the antenna 937. Further, the storage unit 230 may be mounted in the memory 922.

Further, the technology according to the present disclosure may be realized as the in-vehicle system (or the vehicle) 940 including one or more blocks of the car navigation device 920 described above, the in-vehicle network 941, and the vehicle-side module 942. The vehicle-side module 942 generates vehicle-side data such as a vehicle speed, an engine speed, or failure information, and outputs the generated data to the in-vehicle network 941.

### <<3. Conclusion>>

As described above, according to the embodiment of the present disclosure, there is provided the communication control device 100 capable of efficiently allocating resources in consideration of a change in the local environment when the terminal relaying communication has mobility. Further, according to the embodiment of the present disclosure, there is provided the communication control device 100 capable of rewriting the slot format in consideration of a change in the local environment when the terminal relaying communication has mobility.

Each step in the processing performed by each device of the present specification does not necessarily have to be processed in chronological order according to the order described as a sequence diagram or a flowchart. For example, each step in the processing executed by each device may be processed in order different from the order described as the flowchart, or may be processed in parallel.

Further, it is possible to create a computer program for causing the hardware such as the CPU, the ROM, and the RAM incorporated in each device to exhibit the same functions as the configuration of each device described above. Further, a storage medium in which the computer program is stored can be provided. Further, by configuring each functional block illustrated in the functional block diagram with hardware, a series of processing can be realized by the hardware.

The preferred embodiments of the present disclosure have been described in detail with reference to the accompanying drawings, but the technical scope of the present disclosure is not limited to such examples. It is obvious that a person with an ordinary skill in a technological field of the present disclosure could conceive of various alterations or corrections within the scope of the technical ideas described in the appended claims, and it should be understood that such alterations or corrections will naturally belong to the technical scope of the present disclosure.

### Reference Signs List

100 COMMUNICATION CONTROL DEVICE
200 TERMINAL DEVICE

## Claims

1. A communication control device (100) operating as an Integrated Access and Backhaul, IAB, node , comprising:
an acquisition unit (120) that acquires information regarding slot setting and rewritable slots in the setting from another communication control device;
a setting unit (151) that selects a slot to be rewritten from the rewritable slots and rewrites the slot format; and
a communication control unit (153) that executes communication based on the slot format rewritten by the setting unit (151),
**characterized in that**
the communication control device is configured to measure a surrounding radio wave environment, wherein information regarding the surrounding radio wave environment includes at least one of a received power level, a reference signals received power, RSRP, a received signal strength indication, RSSI, and a reference signal received quality, RSRQ, and **in that**
the setting unit (151) is configured to select the slot to be rewritten from the rewritable slots based on the measured radio wave environment.

2. The communication control device according to claim 1, wherein the communication control device further receives a notification of a use situation of a slot format from a parent, child and/or neighbor device and performs a rewriting determination of the slot format based on the measuring of the surrounding radio wave environment and the notification of the use situation.

3. The communication control device according to claim 1, wherein the communication control device further sets a measurement interval, a measurement width, and/or a measurement target as a measurement window.

4. The communication control device according to claim 1, wherein measurement by the communication control device is configured from a donor device, in particular via RRC signaling, or pre-configured.

5. The communication control device according to claim 1, wherein the acquisition unit (120) acquires setting of a slot allocated to another communication control device in the vicinity to which the own station is not linked as information regarding the radio wave environment.

6. The communication control device according to any one of claims 1 to 5, wherein the acquisition unit (120) acquires position information of another communication control device as information regarding the radio wave environment.

7. The communication control device according to any one of claims 1 to 5, wherein the acquisition unit (120) acquires information regarding a use rate of a communication resource of another communication control device as information regarding the radio wave environment.

8. The communication control device according to any one of claims 1 to 5, wherein the acquisition unit (120) acquires information regarding beamforming of another communication control device as information regarding the radio wave environment.

9. The communication control device according to any one of claims 1 to 5, wherein the acquisition unit (120) acquires information regarding occurrence of interference in another communication control device as information regarding the radio wave environment.

10. The communication control device according to claim 9, wherein the information regarding the occurrence of the interference is information regarding an occurrence rate of ACK and NACK.

11. The communication control device according to any one of claims 1 to 10, wherein the acquisition unit (120) acquires information regarding a capability of another communication control device as information regarding the radio wave environment.

12. The communication control device according to any one of claims 1 to 11, wherein the setting unit (151) selects either of:
(a) a slot to be rewritten in consideration of the priority of linking with another device;
(b) a slot to be rewritten in consideration of traffic quality;
(c) a slot to be rewritten so as to decrease an error rate of a packet;
(d) a slot to be rewritten so as to minimize interference of the own station; and
(e) a slot to be rewritten so as to minimize interference with a communication partner.

13. The communication control device according to any one of claims 1 to 12, wherein the communication control unit (153) performs control to notify another device of information regarding the rewritten slot.

14. A communication control method performed by a communication control device (100) operating as an Integrated Access and Backhaul, IAB, node, comprising:
acquiring information regarding slot setting and rewritable slots in the setting from another communication control device;
selecting a slot to be rewritten from the rewritable slots and rewriting the slot format; and
executing communication based on the rewritten slot format
**characterized by**
measuring a surrounding radio wave environment, wherein information regarding the surrounding radio wave environment includes at least one of a received power level, a reference signals received power, RSRP, a received signal strength indication, RSSI, and a reference signal received quality, RSRQ; and
selecting the slot to be rewritten from the rewritable slots based on the measured radio wave environment.

15. A computer program comprising instructions which, when the program is executed by a computer, cause the computer to carry out the method of claim 14.

## Patentansprüche

1. Kommunikationssteuerungsvorrichtung (100), die als Integrated-Access-And-Backhaul-Knoten (IAB-Knoten) arbeitet und Folgendes umfasst:
eine Erfassungseinheit (120), die Informationen bezüglich Zeitschlitzeinstellung und umschreibbarer Zeitschlitze in der Einstellung von einer anderen Kommunikationssteuerungsvorrichtung erfasst;
eine Einstelleinheit (151), die einen umzuschreibenden Zeitschlitz aus den umschreibbaren Zeitschlitzen auswählt und das Zeitschlitzformat umschreibt; und
eine Kommunikationssteuerungseinheit (153), die Kommunikation basierend auf der durch die Einstelleinheit (151) umgeschriebenen Zeitschlitzformats ausführt,
**dadurch gekennzeichnet, dass**
die Kommunikationssteuerungsvorrichtung dazu konfiguriert ist, eine umgebende Funkwellenumgebung zu messen, wobei Informationen bezüglich der umgebenden Funkwellenumgebung mindestens eines aus einem Empfangsleistungspegel, einer Referenzsignalempfangsleistung (Reference Signals Received Power, RSRP); einer Empfangssignalstärkeangabe (Received Signal Strength Indication, RSSI) und einer Referenzsignalempfangsqualität (Reference Signal Received Quality, RSRQ) einschließen, und dadurch, dass
die Einstelleinheit (151) so konfiguriert ist, dass sie den umzuschreibenden Zeitschlitz aus den umschreibbaren Zeitschlitzen basierend auf der gemessenen Funkwellenumgebung auswählt.

2. Kommunikationssteuerungsvorrichtung nach Anspruch 1, wobei die Kommunikationssteuerungsvorrichtung ferner eine Benachrichtigung über eine Nutzungssituation eines Zeitschlitzformats von einer übergeordneten, untergeordneten und/oder benachbarten Vorrichtung empfängt und eine Umschreibermittlung des Zeitschlitzformats basierend auf der Messung der umgebenden Funkwellenumgebung und der Benachrichtigung über die Nutzungssituation durchführt.

3. Kommunikationssteuerungsvorrichtung nach Anspruch 1, wobei die Kommunikationssteuerungsvorrichtung ferner ein Messintervall, eine Messbreite und/oder ein Messziel als Messfenster festlegt.

4. Kommunikationssteuerungsvorrichtung nach Anspruch 1, wobei die Messung durch die Kommunikationssteuerungsvorrichtung aus einer Gebervorrichtung, insbesondere über RRC-Signalisierung, konfiguriert oder vorkonfiguriert ist.

5. Kommunikationssteuerungsvorrichtung nach Anspruch 1, wobei die Erfassungseinheit (120) eine Einstellung eines einer anderen Kommunikationssteuerungsvorrichtung in der Nähe zugewiesenen Zeitschlitzes, mit dem die eigene Station nicht verbunden ist, als Information bezüglich der Funkwellenumgebung erfasst.

6. Kommunikationssteuerungsvorrichtung nach einem der Ansprüche 1 bis 5, wobei die Erfassungseinheit (120) Positionsinformationen einer anderen Kommunikationssteuerungsvorrichtung als Informationen bezüglich der Funkwellenumgebung erfasst.

7. Kommunikationssteuerungsvorrichtung nach einem der Ansprüche 1 bis 5, wobei die Erfassungseinheit (120) Informationen bezüglich einer Nutzungsrate einer Kommunikationsressource einer anderen Kommunikationssteuerungsvorrichtung als Informationen bezüglich der Funkwellenumgebung erfasst.

8. Kommunikationssteuerungsvorrichtung nach einem der Ansprüche 1 bis 5, wobei die Erfassungseinheit (120) Informationen bezüglich einer Strahlformung einer anderen Kommunikationssteuerungsvorrichtung als Informationen bezüglich der Funkwellenumgebung erfasst.

9. Kommunikationssteuerungsvorrichtung nach einem der Ansprüche 1 bis 5, wobei die Erfassungseinheit (120) Informationen bezüglich des Auftretens von Störungen in einer anderen Kommunikationssteuerungsvorrichtung als Informationen bezüglich der Funkwellenumgebung erfasst.

10. Kommunikationssteuerungsvorrichtung nach Anspruch 9, wobei die Informationen bezüglich des Auftretens der Störung Informationen bezüglich einer Auftrittsrate von ACK und NACK sind.

11. Kommunikationssteuerungsvorrichtung nach einem der Ansprüche 1 bis 10, wobei die Erfassungseinheit (120) Informationen bezüglich einer Fähigkeit einer anderen Kommunikationssteuerungsvorrichtung als Informationen bezüglich der Funkwellenumgebung erfasst.

12. Kommunikationssteuerungsvorrichtung nach einem der Ansprüche 1 bis 11, wobei die Einstelleinheit (151) eines auswählt aus:
(a) einem Zeitschlitz, der unter Berücksichtigung der Priorität der Verbindung mit einer anderen Vorrichtung umgeschrieben werden soll;
(b) einem Zeitschlitz, der unter Berücksichtigung der Verkehrsqualität umgeschrieben werden soll;
(c) einem Zeitschlitz, der umgeschrieben werden soll, um eine Fehlerrate eines Pakets zu verringern;
(d) einem Zeitschlitz, der umgeschrieben werden soll, um Störungen der eigenen Station zu minimieren; und
(e) einem Zeitschlitz, der umgeschrieben werden soll, um Störungen mit einem Kommunikationspartner zu minimieren.

13. Kommunikationssteuerungsvorrichtung nach einem der Ansprüche 1 bis 12, wobei die Kommunikationssteuereinheit (153) eine Steuerung durchführt, um einer anderen Vorrichtung Informationen bezüglich des umgeschriebenen Zeitschlitzes mitzuteilen.

14. Kommunikationssteuerungsverfahren, das durch eine Kommunikationssteuerungsvorrichtung (100) durchgeführt wird, die als Integrated-Access-And-Backhaul-Knoten (IAB-Knoten) arbeitet, das Folgendes umfasst:
Erfassen von Informationen bezüglich Zeitschlitzeinstellung und umschreibbarer Zeitschlitze in der Einstellung von einer anderen Kommunikationssteuerungsvorrichtung;
Auswählen eines umzuschreibenden Zeitschlitzes aus den umschreibbaren Zeitschlitzen und Umschreiben des Zeitschlitzformats; und
Ausführen von Kommunikation basierend auf dem umgeschriebenen Zeitschlitzformat, **gekennzeichnet durch**
Messen einer umgebenden Funkwellenumgebung, wobei Informationen bezüglich der umgebenden Funkwellenumgebung mindestens eines aus einem Empfangsleistungspegel, einer Referenzsignalempfangsleistung (RSRP), einer Empfangssignalstärkeangabe (RSSI) und einer Referenzsignalempfangsqualität (RSRQ) einschließen; und
Auswählen des umzuschreibenden Zeitschlitzes aus den umschreibbaren Zeitschlitzen basierend auf der gemessenen Funkwellenumgebung.

15. Computerprogramm, das Anweisungen umfasst, die, wenn das Programm durch einen Computer ausgeführt wird, den Computer veranlassen, das Verfahren nach Anspruch 14 auszuführen.

## Revendications

1. Dispositif de commande de communication (100) fonctionnant en tant que nœud d'accès et de liaison intégrés, IAB, comprenant :
une unité d'acquisition (120) qui acquiert des informations concernant un réglage de créneau et des créneaux réinscriptibles dans le réglage à partir d'un autre dispositif de commande de communication ;
une unité de réglage (151) qui sélectionne un créneau à réinscrire parmi des créneaux réinscriptibles et réinscrit le format de créneau ; et
une unité de commande de communication (153) qui exécute une communication sur la base du format de créneau réinscrit par l'unité de réglage (151),
**caractérisé en ce que**
le dispositif de commande de communication est configuré pour mesurer un environnement d'ondes radio environnant, dans lequel des informations concernant l'environnement d'ondes radio environnant comportent au moins l'un parmi un niveau de puissance reçue, une puissance de réception des signaux de référence, RSRP, une indication d'intensité de signal reçu, RSSI, et une qualité de réception de signal de référence, RSRQ, et **en ce que**
l'unité de réglage (151) est configurée pour sélectionner le créneau à réinscrire parmi les créneaux réinscriptibles sur la base de l'environnement d'ondes radio mesuré.

2. Dispositif de commande de communication selon la revendication 1, dans lequel le dispositif de commande de communication reçoit en outre une notification d'une situation d'utilisation d'un format de créneau en provenance d'un dispositif parent, enfant et/ou voisin et réalise une détermination de réinscription du format de créneau sur la base de la mesure de l'environnement d'ondes radio environnant et de la notification de la situation d'utilisation.

3. Dispositif de commande de communication selon la revendication 1, dans lequel le dispositif de commande de communication règle en outre un intervalle de mesure, une largeur de mesure et/ou une cible de mesure en tant que fenêtre de mesure.

4. Dispositif de commande de communication selon la revendication 1, dans lequel une mesure par le dispositif de commande de communication est configurée à partir d'un dispositif donneur, en particulier par l'intermédiaire d'une signalisation RRC, ou préconfigurée.

5. Dispositif de commande de communication selon la revendication 1, dans lequel l'unité d'acquisition (120) acquiert un réglage d'un créneau attribué à un autre dispositif de commande de communication à proximité duquel la propre station n'est pas reliée, en tant qu'informations concernant l'environnement d'ondes radio.

6. Dispositif de commande de communication selon l'une quelconque des revendications 1 à 5, dans lequel l'unité d'acquisition (120) acquiert des informations de position d'un autre dispositif de commande de communication en tant qu'informations concernant l'environnement d'ondes radio.

7. Dispositif de commande de communication selon l'une quelconque des revendications 1 à 5, dans lequel l'unité d'acquisition (120) acquiert des informations concernant un taux d'utilisation d'une ressource de communication d'un autre dispositif de commande de communication en tant qu'informations concernant l'environnement d'ondes radio.

8. Dispositif de commande de communication selon l'une quelconque des revendications 1 à 5, dans lequel l'unité d'acquisition (120) acquiert des informations concernant une formation de faisceaux d'un autre dispositif de commande de communication en tant qu'informations concernant l'environnement d'ondes radio.

9. Dispositif de commande de communication selon l'une quelconque des revendications 1 à 5, dans lequel l'unité d'acquisition (120) acquiert des informations concernant une occurrence d'une interférence dans un autre dispositif de commande de communication en tant qu'informations concernant l'environnement d'ondes radio.

10. Dispositif de commande de communication selon la revendication 9, dans lequel les informations concernant l'occurrence de l'interférence sont des informations concernant un taux d'occurrence d'ACK et de NACK.

11. Dispositif de commande de communication selon l'une quelconque des revendications 1 à 10, dans lequel l'unité d'acquisition (120) acquiert des informations concernant une capacité d'un autre dispositif de commande de communication en tant qu'informations concernant l'environnement d'ondes radio.

12. Dispositif de commande de communication selon l'une quelconque des revendications 1 à 11, dans lequel l'unité de réglage (151) sélectionne l'un parmi :
(a) un créneau à réinscrire en tenant compte de la priorité de liaison avec un autre dispositif ;
(b) un créneau à réinscrire en tenant compte d'une qualité de trafic ;
(c) un créneau à réinscrire de manière à diminuer un taux d'erreur d'un paquet ;
(d) un créneau à réinscrire de manière à réduire au minimum une interférence de la propre station ; et
(e) un créneau à réinscrire de manière à réduire au minimum une interférence avec un partenaire de communication.

13. Dispositif de commande de communication selon l'une quelconque des revendications 1 à 12, dans lequel l'unité de commande de communication (153) réalise une commande pour notifier à un autre dispositif des informations concernant le créneau réinscrit.

14. Procédé de commande de communication réalisé par un dispositif de commande de communication (100) fonctionnant en tant que nœud d'accès et de liaison intégrés, IAB, comprenant :
l'acquisition d'informations concernant un réglage de créneau et des créneaux réinscriptibles dans le réglage à partir d'un autre dispositif de commande de communication ;
la sélection d'un créneau à réinscrire parmi les créneaux réinscriptibles et la réinscription du format de créneau ; et
l'exécution d'une communication sur la base du format de créneau réinscrit **caractérisé par**
la mesure d'un environnement d'ondes radio environnant, dans lequel des informations concernant l'environnement d'ondes radio environnant comportent au moins l'un parmi un niveau de puissance reçue, une puissance de réception des signaux de référence, RSRP, une indication d'intensité de signal reçu, RSSI, et une qualité de réception de signal de référence, RSRQ ; et
la sélection du créneau à réinscrire parmi les créneaux réinscriptibles sur la base de l'environnement d'ondes radio mesuré.

15. Programme informatique comprenant des instructions qui, lorsque le programme est exécuté par un ordinateur, amènent l'ordinateur à effectuer le procédé selon la revendication 14.
